# FASCICULE DE BREVET EUROPEEN

(11) **EP 4 005 900 B1**
(45) Date de publication et mention de la délivrance du brevet: **15.10.2025**
(21) Numéro de dépôt: 21210600.9
(22) Date de dépôt: 25.11.2021
(51) Int. Cl.: B62B 1/12, B62B 5/00, B62B 5/04

(54) **CHARIOT DE TRANSPORT SÉCURISÉ ET PROCÉDÉ D'UTILISATION**
GESICHERTER TRANSPORTWAGEN UND ANWENDUNGSVERFAHREN
SECURE TRANSPORT CARRIAGE AND METHOD OF USE

(30) Priorité: 27.11.2020 FR 2012313; 27.11.2020 FR 2012316
(43) Date de publication de la demande: 01.06.2022
(73) Titulaire: Mata, Franck, 26000 Valence (FR)
(72) Inventeur: Mata, Franck, 26000 Valence (FR)
(74) Mandataire: Talbot, Alexandre

(56) Documents cités:
- DE-U1- 202008 016 708
- US-A1- 2001 013 358
- US-A1- 2014 077 467

## Description

### Domaine technique

L'invention est relative à un chariot de transport et à son procédé d'utilisation.

### Technique antérieure

Pour la pratique d'activités sur les plages de sable et notamment pour la baignade, il est courant de se séparer d'une partie de ses biens. Plus particulièrement, les personnes laissent leurs clés, leurs documents en papier et tous les autres objets électroniques pour ne pas les abimer, notamment pour ne pas les mouiller. Il est connu des récipients étanches rigides ou souples qui peuvent protéger des clés, un téléphone portable ou d'autres objets de petites tailles. Cependant, cette solution n'est pas pratique à utiliser au quotidien et elle ne permet pas de nager aisément.

Ainsi, lorsque la personne quitte son emplacement pour aller se baigner, elle mise implicitement sur l'observation de ses voisins pour dissuader un voleur de dérober ses biens laissés sans protection. Régulièrement, des vols de biens sont déclarés sur les plages. Les voleurs ont pris le temps de fouiller dans les affaires des baigneurs ou bien ils sont partis avec tous les biens pour faire le tri ultérieurement.

Les documents US2001013358A1 et US2014077467A1, par exemple, décrivent des chariots de plage. Le document DE2020080167U1 divulgue un chariot muni d'une vis de fixation à visser dans le sol.

### Objet de l'invention

Un objet de l'invention consiste à prévoir un chariot de transport qui procure une sécurité accrue en comparaison des configurations de l'art antérieur. A cet effet, le chariot de transport comporte un châssis muni d'une poignée, d'une paire de roues et d'un support.

Le chariot de transport comporte :
- un anneau fixé au châssis, l'anneau définissant une première valeur de diamètre interne ;
- une vis de fixation avec une partie filetée destinée à se visser dans un sol, la vis de fixation possédant un diamètre externe supérieur au diamètre interne de l'anneau, la vis de fixation passant à travers l'anneau pour fixer le chariot de transport au sol.

Selon l'invention, l'anneau est un anneau à diamètre variable. L'anneau est formé par un câble et un bloqueur. Le bloqueur a une première position autorisant l'agrandissement ou le rétrécissement du diamètre de l'anneau et une deuxième position n'autorisant que le rétrécissement du diamètre de l'anneau ou réalisant le blocage du diamètre de l'anneau.

Dans un développement, le bloqueur est disposé sur la face inférieure du châssis.

Préférentiellement, la paire de roues est montée sur un essieu et l'anneau est monté sur l'essieu.

Dans un mode de réalisation particulier, le chariot de transport comporte un containeur sécurisé muni d'un verrou fermant le containeur sécurisé, le containeur sécurisé étant intégral du châssis.

Avantageusement, le chariot de transport comporte un containeur sécurisé muni d'un verrou fermant le containeur sécurisé, le containeur sécurisé étant amovible du châssis, les moyens de liaison du containeur sécurisé avec le châssis se refermant à l'intérieur du containeur sécurisé pour autoriser le démontage du containeur sécurisé uniquement lorsque le containeur sécurisé est ouvert.

Dans une configuration préférentielle, la vis de fixation possède une tige s'étendant depuis la partie filetée et une toile agencée pour former un parasol. Plus préférentiellement, la tige est fixée dans une pièce creuse de la partie filetée.

Dans un mode de réalisation particulier, la tige traverse un anneau additionnel d'au moins un containeur fixé au châssis.

L'invention a également pour objet un procédé d'utilisation d'un chariot de transport qui réduit les risques de vol en comparaison des configurations de l'art antérieur tout en restant simple d'utilisation.

On tend à atteindre ce résultat au moyen d'un procédé d'utilisation d'un chariot de transport comportant les étapes suivantes :
- fournir un chariot selon l'une quelconque des configurations précédentes,
- visser la vis de fixation dans le sol, la vis de fixation passant à travers l'anneau pour fixer le chariot au sol.

### Description sommaire des dessins

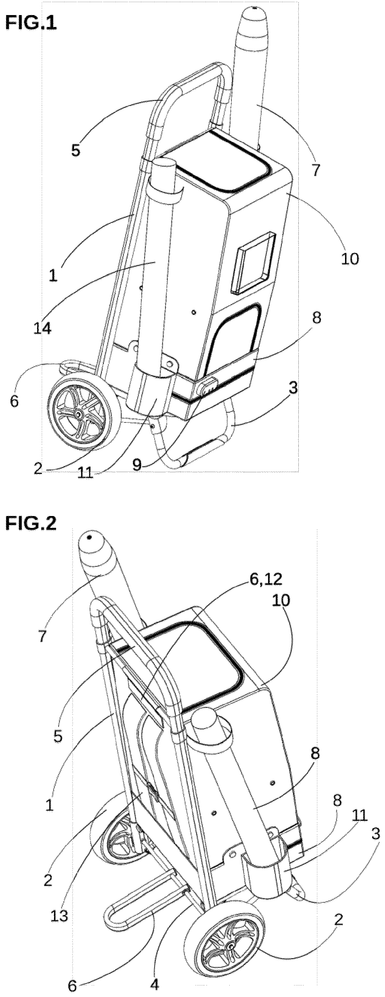

D'autres avantages et caractéristiques ressortiront plus clairement de la description qui va suivre de modes particuliers de réalisation et de mise en œuvre de l'invention donnés à titre d'exemples non limitatifs et représentés aux dessins annexés, dans lesquels :
- ] la figure 1 illustre de manière schématique, une vue en perspective d'un chariot selon l'invention ;
- la figure 2 illustre, de manière schématique, une autre vue en perspective d'un chariot selon l'invention ;
- la figure 3 illustre, de manière schématique, une vue en perspective du châssis d'un chariot selon l'invention ;
- la figure 4 illustre, de manière schématique, une autre vue en perspective du châssis d'un chariot selon l'invention.

### Description des modes de réalisation

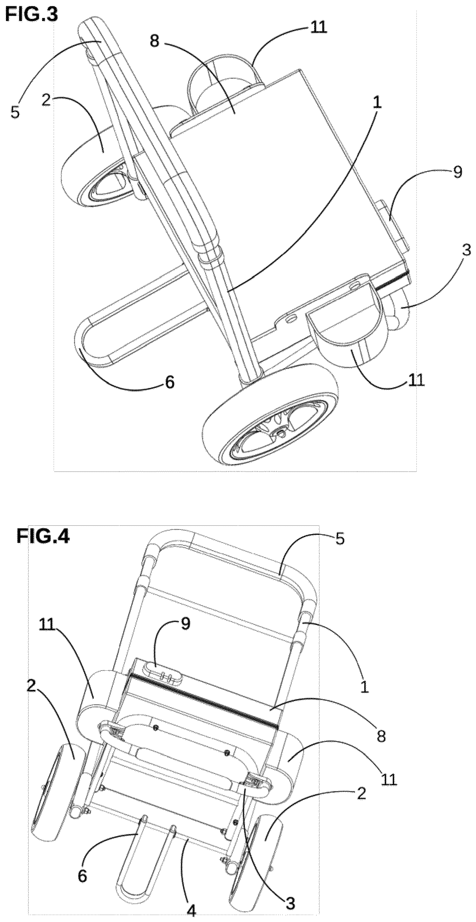

Les figures 1 à 4 illustrent un chariot de transport qui possède un châssis 1 comportant une paire de roues 2 et un support 3. Le châssis 1 est réalisé dans un matériau rigide, par exemple un métal ou un alliage métallique. Le châssis 1 peut être réalisé en acier ou en alliage d'aluminium pour lui procurer la rigidité recherchée tout en fournissant un poids limité. Le châssis 1 peut également comporter une ou plusieurs pièces réalisées dans un matériau plastique en plus du matériau métallique.

Les deux roues 2 de la paire de roues 2 peuvent être montées à rotation autour d'un essieu 4. Dans une alternative de réalisation, les deux roues 2 sont montées indépendamment sur le châssis 1. Il est préférable que les deux roues soient montées en rotation indépendamment l'une de l'autre.

Le châssis 1 forme une poignée 5 disposée dans une partie supérieure du châssis 1 afin de faciliter la préhension et la manœuvrabilité du chariot. Le chariot est monté mobile en rotation autour de l'axe de rotation défini par les deux roues 2 de manière à définir une première position, dite position de repos où le chariot est en appui sur les deux roues et le support 3. Le chariot est en mesure de tenir seul sa position. Dans le mode de réalisation illustré, le support 3 est formé par un tube du châssis recouvert par une couche de protection destinée à venir en contact du sol. Dans un autre mode de réalisation, le support 3 peut être formé par une ou plusieurs roues.

Le chariot peut pivoter autour de l'axe de rotation défini par les roues 2 pour atteindre une position de roulement dans laquelle le support 3 est à distance du sol. En tirant sur la poignée 5, l'utilisateur met en mouvement les roues 2 et il peut déplacer le chariot.

Le châssis 1 définit un anneau 6, c'est-à-dire une forme fermée. De manière préférentielle, l'anneau 6 est monté inamovible du châssis 1. Si l'anneau 6 est monté amovible par rapport au châssis 1, le démontage de l'anneau 6 s'effectue au moyen d'outils pour éviter un démontage trop facile de l'anneau 6. De manière préférentielle, le châssis 1 forme l'anneau 6. Dans une alternative de réalisation, un élément additionnel est monté sur le châssis 1 et l'élément additionnel forme l'anneau 6. L'élément additionnel est monté amovible par rapport au châssis 1.

Le chariot comporte une vis de fixation 7. La vis de fixation 7 possède une section externe filetée. La vis de fixation 7 peut être réalisée dans un matériau quelconque, par exemple en matériau plastique, en matériau métallique ou en bois. Le ou les matériaux formant la vis de fixation 7 sont choisis pour s'adapter à la difficulté d'enfoncement de la vis de fixation 7 dans le sol. Si la vis de fixation 7 est destinée à s'enfoncer dans du sable, il est possible de réaliser au moins la partie filetée de la vis de fixation 7 dans l'un des matériaux précités. Si la vis de fixation 7 est également prévue pour s'enfoncer dans un matériau plus dur, par exemple de la terre, il est préférable d'avoir la partie filetée en matériau métallique, par exemple en aluminium.

Pour assurer la fixation du chariot au sol et ainsi éviter son vol, la vis de fixation 7 est insérée dans l'anneau 6 et enfoncée dans le sol. Dans un mode de réalisation particulier, l'anneau 6 présente un trou traversant pour le passage de la vis de fixation 7. Le trou traversant peut avoir une section interne de forme quelconque. La portion terminale de la vis de fixation 7 présente une dimension supérieure à la dimension de la section interne pour empêcher le passage complet de la vis de fixation 7 à travers l'anneau 6. Lorsque la vis de fixation 7 est insérée dans le sol à travers l'anneau 6, il n'est plus possible d'extraire le châssis 1. Il faut sortir la vis de fixation 7 du sol pour ensuite partir avec le châssis 1.

Une fois installée dans le sol, la vis de fixation 7 peut être fixée à l'anneau pour empêcher son dévissage indépendamment du châssis 1, par exemple au moyen d'un cadenas ou de tout autre élément du châssis 1 permettant la solidarisation entre la vis de fixation 7 et l'anneau 6. Dans ces conditions, pour dévisser la vis de fixation 7, il est nécessaire de faire tourner le châssis 1 autour de l'axe de la vis de fixation 7. Cette opération n'est pas discrète et est donc dissuasive.

Lorsque l'anneau 6 est formé par l'élément additionnel, l'élément additionnel n'est pas démontable du châssis lorsque la vis de fixation 7 est vissée dans le sol. Par exemple l'élément additionnel est d'un côté du châssis 1, l'anneau 6 traverse le châssis 1 et la vis de fixation 7 est disposée de l'autre côté du châssis 1 et passe à travers l'anneau 6.

Dans une alternative de réalisation, la vis de fixation 7 possède une partie filetée qui est prolongée par une tige qui s'étend sur toute la hauteur du châssis 1. La vis de fixation 7 est fixée au châssis 1 au moyen de l'anneau 6 et d'un second point de fixation 12. La désolidarisation du châssis 1 et de la vis de fixation 7 nécessite de soulever le châssis 1 pour faire extraire l'anneau 6 hors de la tige. Cette opération n'est pas discrète et est donc dissuasive.

Dans une autre alternative de réalisation, la vis de fixation 7 possède une partie filetée qui est prolongée par une tige qui s'étend sur au moins toute la hauteur du châssis 1 et qui est terminée par une toile pour former un parasol. L'anneau 6 ayant une section interne inférieure à la section de la toile du parasol, la désolidarisation du châssis 1 et de la vis de fixation 7 passe par le démontage de la vis de fixation 7 pour séparer la partie filetée et la partie parasol. Comme pour les cas précédents, cette opération n'est pas discrète et est donc dissuasive. De préférence, la toile présente une position repliée et une position dépliée. Il est avantageux que dans ces deux positions, le diamètre de la toile soit supérieur au diamètre interne de l'anneau 6.

Il est avantageux que la vis de fixation 7 possède une partie filetée creuse pour autoriser l'insertion de la tige terminée par la toile du parasol. Il est alors possible d'avoir une vis de fixation 7 qui est démontable avec une partie filetée montée amovible de la partie parasol. De multiples configurations d'une partie filetée creuse sont connues et notamment certaines destinées à recevoir un parasol.

Selon l'invention, il est proposé de solidariser le châssis 1 du chariot de transport avec le sol au moyen de la vis de fixation 7 qui s'introduit au moins dans l'anneau 6. Une fois le châssis 1 fixé au sol au moyen de la vis de fixation 7, il devient très difficile voire impossible de s'emparer discrètement du châssis qui contient les biens de la personne partie se baigner.

Pour s'emparer du châssis 1, il est nécessaire de dévisser complètement la vis de fixation 7 ou de démonter la vis de fixation 7 par exemple pour retirer la partie parasol. Cette opération n'est pas compliquée, mais elle demande de se rapprocher du sol pour ensuite dévisser la vis de fixation. L'opération prend du temps ce qui permet d'alerter les personnes environnantes. Pour sa part, le retrait de la partie parasol se fait obligatoirement devant tout le monde.

L'opération est d'autant plus longue et visible que les deux modes de solidarisation sont utilisés avec une partie filetée ayant une section supérieure à la section de l'anneau et la tige de la vis de fixation qui traverse un point de connexion additionnel. Il est alors nécessaire de retirer la partie parasol pour ensuite dévisser la partie filetée de la vis de fixation 7.

Lorsque la vis de fixation 7 possède une extrémité formée par une toile pour former un parasol, il est possible d'utiliser un anneau qui n'est pas fixé directement au châssis 1 mais un anneau 6 qui est rendu inamovible du châssis tant que la vis de fixation 7 est fixée dans le sol. Par exemple, l'anneau est formé par un containeur monté amovible du châssis 1. Le containeur est monté d'un côté du châssis 1, l'anneau passe à travers du châssis et la vis de fixation 7 est montée de l'autre côté du châssis 1. Dans cette configuration, lorsque la vis de fixation 7 est fixée au sol, le containeur et le châssis 1 sont également fixés au sol. Ici, l'élément additionnel est formé par le containeur.

L'anneau 6 peut être un anneau rigide dont le diamètre est fixe. L'anneau 6 est formé par exemple par un tube ou une tige. En alternative, l'anneau peut être souple avec un périmètre fixe et une forme modulable. L'anneau 6 est formé avantageusement par un câble, par exemple en matériau métallique de préférence en acier.

Comme indiqué plus haut, il est préférable que le diamètre de l'anneau 6 soit configuré pour autoriser l'introduction de la vis de fixation 7 de haut en bas. Le chariot est posé puis, la vis est insérée à travers l'anneau 6 pour s'enfoncer dans le sol pour fixer le châssis 1 au sol. Il est préférable que le diamètre interne de l'anneau 6 soit supérieur au diamètre externe de la partie filetée de la vis de fixation 7 pour assurer un blocage du châssis au plus près de la partie filetée. Le diamètre externe de la partie supérieure de la vis de fixation 7 est supérieur au diamètre interne de l'anneau 6 pour interdire l'extraction du chariot par le haut de la vis de fixation et ainsi assurer une protection efficace contre le vol du châssis 1.

Afin d'augmenter la sécurité, il est avantageux de former l'anneau 6 dans la partie inférieure du chariot, par exemple dans un plan horizontal qui contient les roues 2 du chariot lorsque le chariot est debout sur ses deux roues 2 et son support 3. Plus l'anneau 6 est proche du sol et plus l'extraction de la vis de fixation 7 par une personne est visible.

Selon les configurations, l'anneau 6 peut être monté fixe ou mobile par rapport au châssis 1. Dans un mode de réalisation particulier, l'anneau 6 est monté mobile en rotation entre une première position repliée qui interdit l'installation de la vis de fixation 7 et une deuxième position dépliée qui autorise l'installation de la vis de fixation 7 dans le sol. La première position est avantageuse car elle permet de réduire l'encombrement spatial du chariot en supprimant l'encombrement de l'anneau 6 qui est replié vers la partie centrale du châssis 1. La deuxième position est utilisée pour fixer le châssis 1 au sol. L'anneau 6 peut être monté mobile en rotation, en translation ou selon tout autre mouvement.

Selon l'invention, l'anneau 6 est à diamètre variable afin de s'adapter au diamètre externe de la vis de fixation 7. L'anneau 6 est formé par un élément filaire, par exemple un câble métallique préférentiellement recouvert d'une couche de matériau plastique. Le chariot possède un bloqueur possédant une première position autorisant le déplacement de l'élément filaire pour agrandir et rétrécir le diamètre de l'anneau et une deuxième position qui n'autorise que le rétrécissement du diamètre de l'anneau ou qui bloque le diamètre de l'anneau, c'est-à-dire qui interdit le rétrécissement et l'agrandissement.

Dans un mode de réalisation préférentiel, le bloqueur est difficilement accessible lorsque le chariot est fixé au sol. Par exemple, le bloqueur est disposé sous le châssis 1 et préférentiellement entre les roues 2. Une fois la vis de fixation 7 fixée au sol et l'anneau 6 serré pour fixer le châssis 1 à la vis de fixation 7, il est nécessaire de retirer la vis de fixation 7 afin de pouvoir désolidariser la vis de fixation 7 et le châssis 1. L'opération prend quelques minutes et nécessite le cas échéant de retirer la partie parasol pour pouvoir retirer facilement la vis de fixation 7 du sol. Une telle opération n'est pas discrète.

L'utilisation de la vis de fixation 7 permet de rendre nettement plus difficile le vol du châssis 1 une fois que celui est fixé au sol. Afin d'augmenter la sécurité, il est avantageux d'avoir un chariot qui possède un containeur sécurisé 8 qui peut contenir les objets de valeur. Le vol du châssis 1 étant plus compliqué, il est également intéressant d'empêcher un individu de fouiller dans le ou les containeurs du chariot.

Le containeur sécurisé 8 peut être formé avec des parois rigides, par exemple en bois, en matière plastique ou matériau métallique ou un mélange de ces derniers. Le containeur sécurisé 8 peut comporter un verrou 9 qui est configuré pour fermer solidement une porte ou un capot du containeur sécurisé 8. Le verrou 9 peut être un verrou à clé ou un verrou à code. Le containeur sécurisé 8 est réalisé dans un matériau résistant aux chocs afin de supporter l'utilisation du chariot et des chutes éventuelles. Il n'est pas réalisé afin de former un coffre-fort résistant à la force brute ce qui alourdit considérablement le chariot. L'utilisation d'un verrou 9 sur un containeur sécurisé 8 permet de retarder l'ouverture non intentionnelle du containeur ce qui rend l'opération plus risquée par un voleur qui n'a pas réussi à voler le châssis 1.

Dans une alternative de réalisation, le containeur sécurisé 8 est formé par une ou plusieurs parois souples qui sont préférentiellement réalisée dans un matériau qui résiste aux lacérations, par exemple un poly(p-phénylènetéréphtalamide) (PPD-T) commercialisé sous la dénomination Kevlar. La fermeture du containeur est réalisée au moyen d'une fermeture éclair avec deux actionneurs montés fixement l'un à l'autre au moyen d'un cadenas.

Si le containeur sécurisé 8 est monté amovible par rapport au châssis 1, les moyens de fixation du containeur sécurisé 8 au châssis 1 débouchent à l'intérieur du containeur sécurisé 8 de manière à n'autoriser l'extraction du containeur sécurisé 8 qu'une fois que ce dernier est ouvert. Dans un autre mode de réalisation, le containeur est monté inamovible par rapport au châssis 1.

Il est avantageux d'installer le bloqueur dans le containeur sécurisé 8 afin de pouvoir désolidariser l'anneau 6 et la vis de fixation 7 lorsque le containeur sécurisé 8 est ouvert. La sécurité est renforcée.

Le chariot peut comporter au moins un containeur additionnel 10 qui est non sécurisé, c'est-à-dire qui peut être ouvert sans désactivation d'un verrou.

Il est avantageux de prévoir que le chariot possède un premier moyen de rangement de la vis de fixation 7 au châssis 1 qui est différent de l'anneau 6. Dans le mode de réalisation illustré, le châssis 1 possède un ou plusieurs réceptacles 11. Le ou les réceptacles sont agencés pour supporter, par exemple un tapis de plage 14 et/ou une vis de fixation 7 formant un parasol. Dans le mode de réalisation particulier illustré aux figures 1 et 2, une vis de fixation 7 formant parasol et un tapis de plage 14 sont montés sur les deux réceptacles 11.

Selon les modes de réalisation, la vis de fixation 7 formant parasol peut être formée monobloc, c'est-à-dire que la toile n'est pas dissociable de la partie filetée. En alternative, la vis de fixation 7 peut être réalisée par plusieurs pièces démontables les unes par rapport aux autres, par exemple deux ou trois pièces.

Dans le mode de réalisation illustré à la figure 2, le point de connexion additionnel entre la vis de fixation 7 et le châssis 1 est formé par un anneau additionnel 12 qui est fixé sur un containeur 10 monté amovible par rapport au châssis 1. Dans cette configuration, l'installation de la vis de fixation 7 dans l'anneau 6 et dans l'anneau additionnel 12 permet d'assurer la solidarisation du containeur amovible avec le châssis 1 et de rendre plus complexe son vol.

Lorsque le containeur additionnel 10 est monté amovible, ce dernier peut être pourvu de bretelles 13 pour faciliter son transport hors du châssis 1.

Dans un mode d'utilisation particulier, le châssis est installé sur le sol dans la première position. La vis de fixation 7 est introduite dans le sol en passant à travers l'anneau 6. Le vissage de la vis de fixation 7 dans le sol permet de fixer le châssis 1 au sol. De manière préférentielle, la partie filetée est visée dans le sol puis, une fois vissée, la tige surmontée de la toile formant la partie parasol est installée dans la partie filetée. Préférentiellement, la tige passe à travers un anneau additionnel pour former un second point de sécurisation entre la vis de fixation 7 et le châssis 1 et/ou un containeur 10 monté sur le châssis 1.

Les objets de valeur sont installés dans un des containeurs du chariot et de préférence dans le containeur sécurisé 8. Lorsque le containeur sécurisé est fermé par un verrou à code, l'utilisateur peut se baigner sans risque de perdre la clé du verrou.

Le chariot ne peut pas être désolidarisé du sol sans extraction de la vis de fixation ou démontage partiel de la vis de fixation 7 ce qui n'est pas discret.

Au moment du départ, la partie parasol peut être démontée le cas échéant, la vis de fixation 7 est dévissée. La vis de fixation 7 avec sa partie parasol est installée dans un des réceptacles.

De manière avantageuse, le chariot comporte une seule paire de roues 2. Préférentiellement, le chariot est plus haut que long et que large. Dans un mode de réalisation particulier, la vis de fixation 7 est montée inamovible par rapport au châssis 1.

## Revendications

1. Chariot de transport comprenant :
- un châssis (1) muni d'une poignée (5), d'une paire de roues (2) et d'un support (3) ;
- un anneau (6) fixé au châssis (1), l'anneau (6) définissant une première valeur de diamètre interne ;
- une vis de fixation (7) avec une partie filetée destinée à se visser dans un sol, la vis de fixation (7) possédant un diamètre externe supérieur au diamètre interne de l'anneau (6), la vis de fixation (7) passant à travers l'anneau (6) pour fixer le chariot de transport au sol ;
chariot de transport **caractérisé en ce que** l'anneau (6) est un anneau à diamètre variable et **en ce que** l'anneau (6) est formé par un câble et un bloqueur, le bloqueur ayant une première position autorisant l'agrandissement ou le rétrécissement du diamètre de l'anneau (6) et une deuxième position n'autorisant que le rétrécissement du diamètre de l'anneau (6) ou le blocage du diamètre.

2. Chariot de transport selon la revendication 1 dans lequel la vis de fixation (7) possède une portion terminale qui présente une dimension supérieure à la dimension de la section interne de l'anneau (6) pour empêcher le passage complet de la vis de fixation (7) à travers l'anneau (6).

3. Chariot de transport selon l'une des revendications 1 et 2 dans lequel le bloqueur est disposé sur la face inférieure du châssis (1).

4. Chariot de transport selon l'une quelconque des revendications précédentes dans lequel la paire de roues (2) est montée sur un essieu (4) et dans lequel l'anneau (6) est monté sur l'essieu (4).

5. Chariot de transport selon l'une quelconque des revendications précédentes comportant un containeur sécurisé (8) muni d'un verrou (9) fermant le containeur sécurisé (8), le containeur sécurisé (8) étant intégral du châssis (1).

6. Chariot de transport selon l'une quelconque des revendications 1 à 4 comportant un containeur sécurisé (8) muni d'un verrou (9) fermant le containeur sécurisé (8), le containeur sécurisé (8) étant amovible du châssis (1), les moyens de liaison du containeur sécurisé (8) avec le châssis (1) se refermant à l'intérieur du containeur sécurisé (8) pour autoriser le démontage du containeur sécurisé (8) uniquement lorsque le containeur sécurisé (8) est ouvert.

7. Chariot de transport selon l'une quelconque des revendications 1 à 6 dans lequel, la vis de fixation (7) possède une tige s'étendant depuis la partie filetée et une toile agencée pour former un parasol, la toile ayant un diamètre externe supérieur au diamètre interne de l'anneau (6) et préférentiellement dans lequel la tige est fixée dans une pièce creuse de la partie filetée.

8. Chariot de transport selon la revendication 7 dans lequel la tige traverse un anneau additionnel (12) d'au moins un containeur fixé au châssis (1).

9. Procédé d'utilisation d'un chariot de transport comportant les étapes suivantes :
- fournir un chariot de transport selon l'une quelconque des revendications précédentes,
- visser la vis de fixation (7) dans le sol, la vis de fixation (7) passant à travers l'anneau (6) pour fixer le chariot de transport au sol.

## Patentansprüche

1. Transportwagen, umfassend:
- ein Fahrgestell (1), das mit einem Griff (5), einem Paar Rädern (2) und einem Ständer (3) versehen ist;
- einen Ring (6), der am Fahrgestell (1) befestigt ist, wobei der Ring (6) einen ersten Innendurchmesserwert definiert;
- eine Befestigungsschraube (7) mit einem Gewindeabschnitt, der dazu bestimmt ist, in einen Boden geschraubt zu werden, wobei die Befestigungsschraube (7) einen Außendurchmesser aufweist, der größer ist als der Innendurchmesser des Rings (6), wobei die Befestigungsschraube (7) durch den Ring (6) hindurch geht, um den Transportwagen am Boden zu befestigen;
wobei der Transportwagen **dadurch gekennzeichnet ist, dass** der Ring (6) ein Ring mit variablem Durchmesser ist, und dass der Ring (6) durch ein Seil und eine Blockiervorrichtung gebildet wird, wobei die Blockiervorrichtung eine erste Position, die die Vergrößerung oder die Verkleinerung des Durchmessers des Rings (6) zulässt, und eine zweite Position aufweist, die nur die Verkleinerung des Durchmessers des Rings (6) oder die Blockierung des Durchmessers zulässt.

2. Transportwagen nach Anspruch 1, wobei die Befestigungsschraube (7) einen Endabschnitt aufweist, der eine Abmessung hat, die größer als die Abmessung des Innenquerschnitts des Rings (6) ist, um den vollständigen Durchgang der Befestigungsschraube (7) durch den Ring (6) zu verhindern.

3. Transportwagen nach einem der Ansprüche 1 und 2, wobei die Blockiervorrichtung an der Unterseite des Fahrgestells (1) angeordnet ist.

4. Transportwagen nach einem der vorherigen Ansprüche, wobei das Paar Räder (2) auf einer Achse (4) montiert ist, und wobei der Ring (6) auf der Achse (4) montiert ist.

5. Transportwagen nach einem der vorherigen Ansprüche, umfassend einen gesicherten Behälter (8), der mit einem Riegel (9) versehen ist, der den gesicherten Behälter (8) verschließt, wobei der gesicherte Behälter (8) mit dem Fahrgestell (1) aus einem Stück ist.

6. Transportwagen nach einem der Ansprüche 1 bis 4, umfassend einen gesicherten Behälter (8), der mit einem Riegel (9) versehen ist, der den gesicherten Behälter (8) verschließt, wobei der gesicherte Behälter (8) vom Fahrgestell (1) abnehmbar ist und die Mittel zur Verbindung des gesicherten Behälters (8) mit dem Fahrgestell (1) sich im Inneren des gesicherten Behälters (8) schließen, um die Demontage des gesicherten Behälters (8) nur zuzulassen, wenn der gesicherte Behälter (8) geöffnet ist.

7. Transportwagen nach einem der Ansprüche 1 bis 6, wobei die Befestigungsschraube (7) eine Stange, die sich vom Gewindeabschnitt aus erstreckt, und ein Tuch aufweist, das angeordnet ist, um einen Sonnenschirm zu bilden, wobei die Stange einen Außendurchmesser hat, der größer ist als der Innendurchmesser des Rings (6), und wobei die Stange bevorzugt in einem hohlen Teil des Gewindeabschnitts befestigt ist.

8. Transportwagen nach Anspruch 7, wobei die Stange durch einen zusätzlichen Ring (12) mindestens eines am Fahrgestell (1) befestigten Behälters verläuft.

9. Verfahren zur Verwendung eines Transportwagens, umfassend die folgenden Schritte:
- Bereitstellen eines Transportwagens nach einem der vorherigen Ansprüche,
- Einschrauben der Befestigungsschraube (7) in den Boden, wobei die Befestigungsschraube (7) durch den Ring (6) verläuft, um den Transportwagen am Boden zu befestigen.

## Claims

1. Transport trolley comprising:
- a frame (1) equipped with a handle (5), a pair of wheels (2) and a support (3);
- a ring (6) attached to the frame (1), the ring (6) defining a first internal diameter value;
- a fixing screw (7) with a threaded portion intended to be screwed into a ground, the fixing screw (7) having an external diameter greater than the internal diameter of the ring (6), the fixing screw (7) passing through the ring (6) to fix the transport trolley to the ground;
transport trolley **characterised in that** the ring (6) is a variable diameter ring and **in that** the ring (6) is formed by a cable and a blocker, the blocker having a first position allowing the diameter of the ring (6) to be enlarged or reduced and a second position allowing only the diameter of the ring (6) to be reduced or the diameter to be blocked.

2. Transport trolley according to claim 1, wherein the fixing screw (7) has an end portion presenting a dimension larger than the dimension of the internal cross-section of the ring (6) to prevent the fixing screw (7) from passing completely through the ring (6).

3. Transport trolley according to one of claims 1 and 2, wherein the blocker is disposed on the underside of the frame (1).

4. Transport trolley according to any of the preceding claims, wherein the pair of wheels (2) is mounted on an axle (4) and wherein the ring (6) is mounted on the axle (4).

5. Transport trolley according to any of the preceding claims, comprising a secure container (8) equipped with a lock (9) closing the secure container (8), the secure container (8) being integral with the frame (1).

6. Transport trolley according to any of claims 1 to 4, comprising a secure container (8) equipped with a lock (9) closing the secure container (8), the secure container (8) being removable from the frame (1), the means for connecting the secure container (8) to the frame (1) closing inside the secure container (8) to allow the secure container (8) to be removed only when the secure container (8) is open.

7. Transport trolley according to any of claims 1 to 6, wherein the fixing screw (7) has a stem extending from the threaded portion and a fabric arranged to form a parasol, the fabric having an external diameter greater than the internal diameter of the ring (6) and preferably wherein the stem is fixed in a hollow part of the threaded portion.

8. Transport trolley according to claim 7, wherein the stem passes through an additional ring (12) of at least one container fixed to the frame (1).

9. Method of using a transport trolley comprising the following steps:
- providing a transport trolley according to any of the preceding claims,
- screwing the fixing screw (7) into the ground, the fixing screw (7) passing through the ring (6) to fix the transport trolley to the ground.
